Europäisches Patentamt

European Patent Office

Office européen des brevets

(11) Publication number: **0 445 491 A2**

# EUROPEAN PATENT APPLICATION

(21) Application number: 90830373.8

(22) Date of filing: **10.08.90**

(51) Int. Cl.⁵: **B01D 35/26, A01K 63/04, A01K 61/00, E04H 4/16**

(30) Priority: **08.03.90 IT 4773290**

(43) Date of publication of application:
**11.09.91 Bulletin 91/37**

(84) Designated Contracting States:
**AT BE CH DE DK ES FR GB GR IT LI LU NL SE**

(71) Applicant: **Romagnoli, Silvestro**
**Via Nomentana, 322**
**I-00141 Roma(IT)**

(72) Inventor: **Romagnoli, Silvestro**
**Via Nomentana, 322**
**I-00141 Roma(IT)**

(74) Representative: **Lanzoni, Luciano**
**c/o Bugnion S.p.A. Piazza dei Re di Roma, 21**
**I-00183 Roma(IT)**

(54) **Water regenerator device for aquariums, fish-breeding tanks, tanks, swimming pools and similar.**

(57) This invention describes a water regenerator device for aquariums, fish-breeding tanks, tanks, swimming pools and all those systems requiring water regenerators of the type that characteristically have a single body (1) inside a container (2) which has a series of decantation compartments (3, 7) connected by overflow, a compartment (10) containing a per- colator filter (11) below which there is an expansion compartment (15), a chamber (16), at the side of the compartment (10) containing a pump which is connected to the container (2) and the decantation compartment (7) by inlet pipes (18, 19); the aforementioned expansion compartment (15) has a valve (22).

FIG4

This invention concerns a water regenerator device for use with aquariums, fish-breeding tanks, tanks, swimming pools and all those systems which require water regeneration, such as incubation tanks, breeding tanks for fry, water culture. Henceforth, for the sake of clarity, reference will be made in particular to a water regenerator device for use with aquariums;

It is known that aquariums are over-populated with fish in relation to the amount of water contained in them; the success of an aquarium depends on the ability of the aquarium keeper to control all the chemical and physical events in this relatively small amount of water.

Waste products from fish, snails, plants and other factors accumulate and pollute the water.

This process is remedied by regularly changing the water, by providing adequate filtering through the use of filter and a pump which are connected to the aquarium by a series of pipes.

In this way the water in the aquarium is constantly cleaned and freed of residues and metabolic substances produced by fishes and plants.

The most efficient form of filtering and the one which is in fact the most widely used especially for aquariums and breeding tanks is the biological-bacteriological type which most commonly employs a percolator type of filter.

Biological-bacteriological filtering is understood as filtering through a material colonized with aerobic bacteria which extract pollutant substances from the water thus cleaning and regenerating the water in the aquarium.

At the present time the regular changing and filtering of aquarium water requires the installation of a various pieces of equipment with pipes and cables for heating, for the pump and for the housing and support of the filters, etc; the result is a confusion of cables, pipes and box-like components all of which require a special piece of furniture to support them which means that the aquarium cannot be mounted on ordinary furniture.

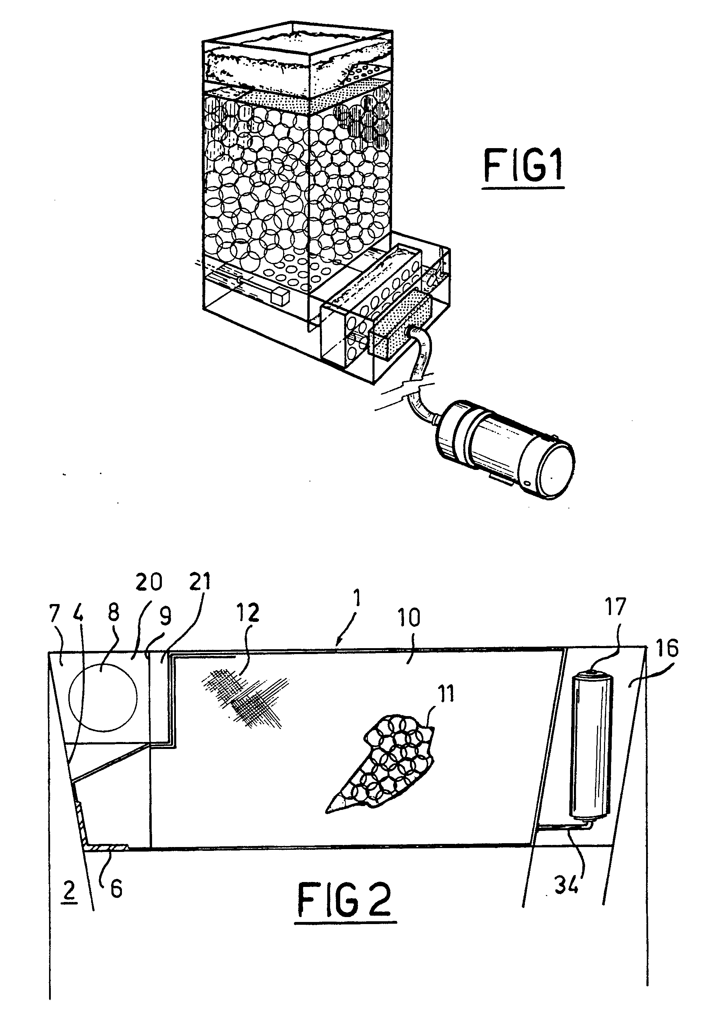

The current method, shown in the example in figure 1, involves the use of a box-shaped pick-up tank attached to the aquarium with a pick-up grill mounted level with the surface of the water. This type of tank picks up surface water only; most waste substances float and are therefore sucked up and transported to the filter. This type of surface pick-up has disadvantages in that a stagnant area remains just above the material lining the bottom of the tank where heavy residues such as excrement, food and plant remains are deposited.

The surface water picked up enters the filter and arrives at a first pre-filtering chamber where the first amount of dirt is collected. Next, the water flows down into a second compartment, through a grate and into the percolation compartment which is filled with small plastic balls which have a structure with a specially shaped surface. The surface structure of the balls is such that it permits the settlement of vast bacteria colonies without reducing or covering the filtering surface as is the case with fine, porous filters.

The water drips down through the numerous percolation paths in the structure. The filling material of the percolator filter rests on a grate with holes large enough to prevent the balls from falling into the water chamber below. On the lower part of the filter there is an air diffuser which has the task of driving air, from an aerator, upwards from the bottom of the percolator filter against the current of water flowing downwards. The high degree of humidity of this air, even when there are special devices designed to condense the humidity, causes undesirable evaporation in the system and this is dispersed in the piece of furniture supporting the equipment.

To prevent potential damage which might be caused by dry running, this type of widely used equipment must be fitted with an electric sensor which switches off the pump if the water level drops below the permitted level. At the same time, however, this type of filter must operate continuously if it is to function efficiently; the total lack of dripping water with its nutrients and the lack of oxygen exchange will cause the death of the colony of aerobic bacteria created. As a result in order to restart and return the filter to full efficiency after a stoppage it will be necessary to repeat the long procedure for starting a new, adequate bacteria colony.

An aquarium also needs good, constant water circulation to ensure constant temperature and oxygenation in all parts of the aquarium and to remove decomposing organic substances from plant leaves and to provide a fresh supply of nutrients.

In order to guarantee satisfactory water circulation it is at present often necessary to provide another pump which inevitably brings with it additional problems in terms of installation, size, cost and power consumption.

As we have seen above, the need to use two or more pumps is a source of considerable problems; the pumps are not practical let alone aesthetically pleasing and are obviously costly. Such pumps have to be mounted at varying heights and distances and must be of a size sufficient to guarantee the necessary head of water and compensate for the notable losses involved with the considerable lengths of tubing required; for these reasons such pumps are never likely to be small or low-cost. These pumps are also sensitive to dust and damp, they require a certain amount of maintenance and when mounted inside cupboards are also subject to humidity and mineral salt deposits.

Anti-foaming devices, phase separators and other similar flocculation devices can only be used with the known type of equipment if these devices are mounted inside the aquarium itself, i.e. in full view; obviously this spoils the overall appearance of an aquarium.

This known type of water regenerator therefore presents a series of technical and practical disadvantages which have been outlined above.

The aim of the present invention is to eliminate all these disadvantages and overcome all the problems mentioned above.

The object of the present invention is the realisation of water regenerator device for aquariums, tanks, fish-breeding tanks and swimming pools consisting of a single-piece, compact structure which can be placed inside the container holding the water to be regenerated, inside an aquarium, breeding tank or similar type of container; the device also houses a very small pump.

A further aim of the invention is to eliminate the need for drilling, recesses or openings in the aquarium walls and to eliminate all the cables and pipes usually required with water regenerators mounted outside tanks; the aim of this invention is therefore to provide a device with an pleasant overall appearance at a considerably reduced cost. A additional aim of this invention is to provide a device that can be manufactured in a modular form, i.e. made-to-measure for direct attachment to existing aquariums.

The invention described in the claims below resolves the problem of providing a water regenerator device for aquariums, fish-breeding tanks, tanks and swimming pools with a more compact structure and a more pleasing aesthetic appearance by providing a device which has a single body with a prismatic or cylindrical shape which can be placed inside and contained by the container holding the water to be regenerated; the device houses the following components which are now listed in their functional order:

- a first decantation compartment, prismatic or cylindrical in shape, with one side in contact with the water to be regenerated inside the container having on the lower part of the said side one or more inlet holes and on the upper part a pick-up grill for the water to be regenerated, said grill being at a height that ensures the transfer by overflow of the water in the compartment during normal water level variations in a periodic cycle;
- a second decantation compartment also with a prismatic or cylindrical shape, lower than the said first decantation compartment, which receives the water to be regenerated from the adjacent first decantation compartment when the latter overflows;

- a third compartment containing a percolator filter mounted between a first, upper grate and a second, lower grate both being water permeable and connected to the said second decantation compartment and receiving water from the latter when it overflows;
- a fourth expansion compartment below the other compartments extending for the full length of the said compartments, which receives the regenerated water from the said percolator filter through the grate on an inclined surface forming the top part of the fourth compartment;
- a chamber positioned alongside the said third compartment, housing a pump with a first inlet pipe connected to the container and a second inlet pipe, leading off the first inlet pipe, and connected to the second decantation compartment and with a suction connection to the said expansion compartment;
- the said expansion compartment is fitted with a valve which permits the flow of water to be regenerated from the container to the said expansion compartment when the regenerated water in the expansion compartment is close to and just above the said suction level of the pump and to stop the inflow when the said level has returned to normal running conditions.

One of the advantages of this invention is that it makes possible the construction of a water regenerator device where all components are housed inside a single body that has a modular form, both horizontally, vertically and in various combinations; this body could house, for example, a large number of horizontal compartments connected to a single filtering element or could have a large number of containers, holding the water to be regenerated, which could be horizontally connected to a single central regeneration device.

The other characteristics and advantages of this invention will be found in the detailed description below which shows one preferred, but not exclusive, version of a water regenerator constructed in accordance with this invention and illustrated in the attached drawings showing only one of the possible versions of the example and which are not to be interpreted as being in any way restrictive.

The drawings are as follows:
- figure 1 shows a percolator filter of the known type complete with pump;
- figure 2 shows a diagrammatic view from above of the water regenerator device described in the present invention;
- figure 3 shows a perspective view of the water regenerator device described in the present invention;
- figure 4 shows a cross section of the device in figure 3.

Figure 2 shows a single body 1, positioned and housed inside a container 2, forming a water regenerator device for aquariums, fish-breeding tanks, tanks, swimming pools and all systems requiring water regeneration, constructed according to this invention.

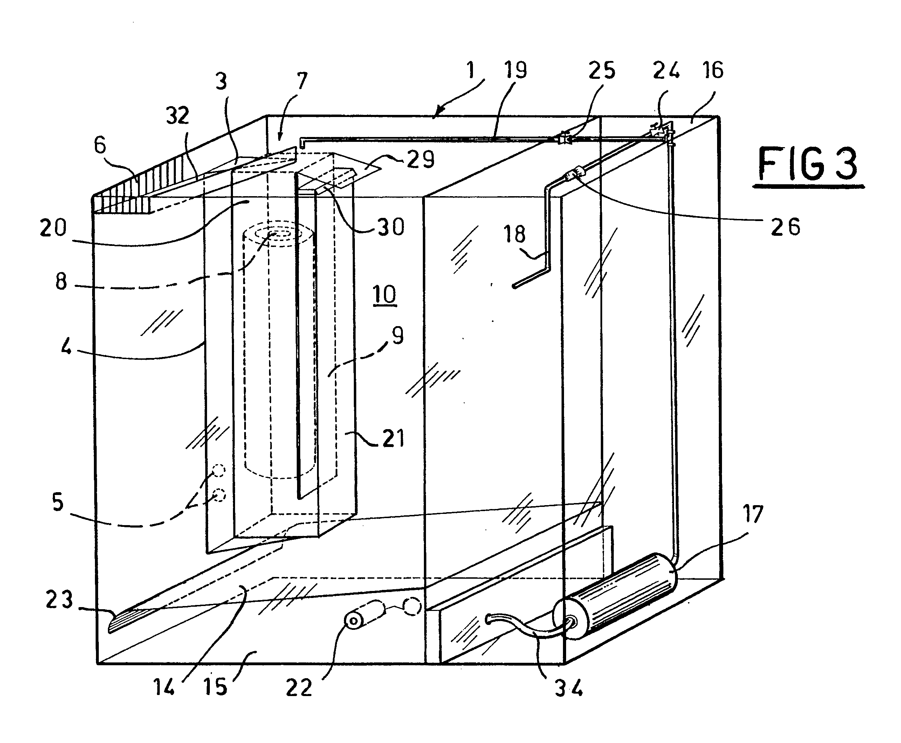

The said single body 1 houses a first decantation compartment 3 which is shown here with a prismatic shape, but which could equally as well be cylindrical in shape, and whose vertical measurement is greater than any of its other measurements. The said compartment 3 has one side 4 in contact with the water to be regenerated in the container 2 (figure 3) and its upper part has a pick-up grill 6 for the water to be regenerated, said grill being at a such a height as to ensure the transfer by overflow of the water in the first decantation compartment 3 during normal water level variations in a periodic cycle. The said grill 6 is at an angle to the body 1 and covers an inlet surface 32, carrying the water to be regenerated, which ends at the upper end of the the said first decantation compartment 3.

On the lower part of the said side 4, which in the case of an aquarium for example would be immediately above the material lining the bottom of the container 2, there are one or more inlet holes 5 connecting the container 2 with the first decantation chamber 3.

The water in the container 2 is poured through the pick-up grill 6 and flows along the inlet surface 32 into the first decantation compartment 3.

The water contained in the said first decantation compartment 3 overflows into the second decantation compartment 7.

The said second decantation compartment 7 is adjacent to the first compartment 3, and also has a prismatic or cylindrical shape but is lower than the said first decantation compartment 3; the vertical height measurement of the said second compartment 7 is greater than all its other measurements.

The said second decantation compartment 7 is conveniently divided into two sub-compartments 20 and 21, the second of which is lower than the first, which are connected at the bottom through a dividing wall 9 inside the compartment 7 and are connected at the top by overflow to the third compartment 10.

According to this invention the first sub-compartment 20 houses an anti-foaming device 8 or other commonly-used means such as a phase separator or a flocculation device (figure s 3 and 4), not shown here for reasons of clarity.

The need for an anti-foaming device 8 is based on the fact, for example, that in sea-water containing organic substances, air bubbles collect at the surface of the water but do not burst as they do in clean, freshwater.

The anti-foaming device separates the foam rich in protein substances and pollutant residues from normal, clean foam which then disappears rapidly.

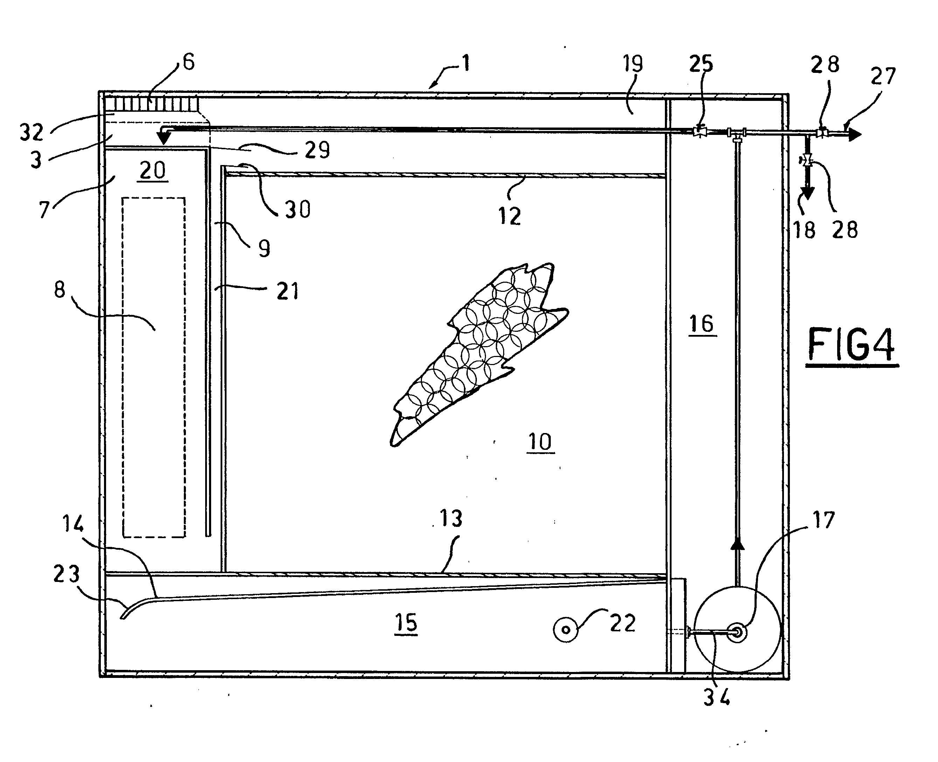

In the case therefore of equipment fitted with such an anti-foaming device, the water overflows into the second decantation compartment 7, into the first sub-compartment 20 and into the device 8 (figure 4) and then at the bottom of the compartment passes into the other sub-compartment 21. In the case where some of water in the sub-compartment 20 does not manage to flow through the anti-foaming device 8, it will overflow onto an angled water conveying plate 29 and into the said compartment 10. The water that does, on the other hand, pass through the anti-foaming device 8 then passes through the dividing wall 9 into the sub-compartment 21 and overflows on an angled plate 30 at the top of the compartment 21 into the third compartment 10. The angled plate 30 is located on the same side as the angled plate 29 but is at a lower level; both plates transport the water to be regenerated.

The third compartment 10 contains a percolator filter 11, closed at the top by a first water-permeable grate 12 and at the bottom by a second water-permeable grate 13, which is connected, as already stated, by overflowing to the second compartment 7 and therefore also connected to both of the sub-compartments 20 and 21.

The water is distributed along the entire surface of the grate 12 so that it passes slowly through the grate and drips onto the balls which are commonly used in the known type of percolator filter 11.

It would also be possible to make a percolator filter 11 composed of various layers of different types of filtering material, separated where necessary by permeable dividers made for example of synthetic cotton wool, carbon, clay pipes, according to know methods.

Below the said compartment 3, 7 and 10, and extending along the full length of these compartments, there is a fourth expansion compartment 15 which receives the regenerated water from the percolator filter 11 through the said lower grate 13 on an inclined surface 14 forming the top part of the fourth compartment.

The said inclined surface 14 has a curved end 23 (figures 3 and 4) on its lower side which is curved in such a way that the end 23 is below the level of the regenerated water so that the regenerated water gently flows rather than drips into the fourth expansion compartment 15 thus avoiding the annoying noise normally associated with this type of device. Alongside the third compartment 10, containing the percolator filter 11, and the expansion compartment 15 there is a chamber 16 housing a pump 17, which according to the characteristics of this invention need only be a small one, which has a suction connection the said expansion compartment 15.

The said pump 17 has a first inlet pipe 18 connected to the container 2 just below the level of the water to be regenerated and a second inlet pipe 19 leading off the first pipe 18 which is in turn connected to the second decantation compartment 7 and more precisely with the sub-compartment 20 containing the anti-foaming device 8. The pump 17 sucks up water at a particular level in the fourth expansion compartment 15 and pours the regenerated water through the first inlet pipe 18 into the container 2.

As well as regenerating the water, this method also provides good water movement and circulation to guarantee a constant temperature throughout the container 2 without the formation of cold or hot areas; the said good water circulation also removes decomposed organic substances from plant leaves and the current provided positively influences the exchange of nutrients in the water.

The said first inlet pipe 18 connected to the container 2 has a water flow regulator valve 24 and a device 26 for sucking air in from the outside and mixing it with the flow of water. The device 26, known as a Venturi tube, is designed to prevent any water return caused by a sudden stoppage due, for example, to an electrical power failure in the pump 17. In such an event the air sucked in by the device 26 creates an air bubble which isolates the pump 17 from the water which might otherwise be sucked back, in the wrong direction, along the inlet pipe 18. The device 26 also further oxygenates the water being poured into the container 2.

The second inlet pipe 19 connected to the decantation compartment 7 can be fitted, in addition to the flow regulator valve 25, with a second air suction device 26 used to aerate the percolator filter 11.

In addition to the two inlet pipes 18 and 19 and the pump 17, the chamber 16 also houses a third inlet pipe 27 fitted with a flow regulator valve 28 which feeds regenerated water to the bottom of the container 2.

The said third inlet pipe 27 for freshwater aquariums or salt water aquariums with sand or other material on the bottom; often these aquariums require water circulation from the bottom upwards to prevent the accumulation of organic residues. The third inlet tube 27 can be advantageously located below the sand to prevent this.

The fourth expansion compartment 15 has a valve 22 of the conventional type, electrical but preferably of the float type as shown in the example in figure 3, located so as to permit a flow of water to be regenerated into the said expansion compartment from the container 2 before the said fourth expansion compartment 15 becomes completely empty; i.e. it permits a flow of water to be regenerated into the compartment when the regenerated water inside the compartment is level with or just above the level of the said suction connection 34 of the pump 17.

The water regenerator is in fact a closed system where the amount of water sucked up by the pump 17 and poured into the container 2 is equal to the amount of water returning by overflow into the third compartment 10 housing the percolator filter 11. In the case where the water level in the container 2 falls below the level of the pick-up grill 6 due, for example, to evaporation, then obviously the water will not flow into the pick-up grill 6 but will enter the inlet holes 5 on the side 4 of the first decantation compartment 3 until the water level in the container 2 falls below the overflow level of the first decantation compartment 3.

The pump 17, in continuous operation, sucks up the water remaining in the fourth expansion chamber 15 and will then begin to run dry with the risk that it could be damaged.

To prevent this and the disastrous consequences of such an event for the aquarium, the valve 22 in the said fourth expansion compartment 15 opens to permit an inflow of water from the container 2 to the fourth expansion chamber 15 before the said compartment 15 becomes completely empty and stops the inflow of water when the level inside the compartment 15 returns to normal running conditions.

It is clear that with this type of device there is a continuous work cycle such that the water continuously percolates in the filter 11 thus preventing drying-out or a lack of nutrients or oxygen which would otherwise cause the death of the aerobic bacteria which are essential to the process of water regeneration.

According to the invention, the pump 17 housed inside the body 1 can in some cases be used to heat the aquarium water. Using an oil-cooled, immersion pump and connecting, by means of an external control, the fourth expansion compartment 15 with the chamber 16 containing the pump 17, it would be possible to at least partially heat the regenerated water before it is returned to the container 2 by exploiting the heat produced by the pump. In the summer when this heating might not be necessary it would be sufficient to isolate the chamber 16 from the compartment 15. In cases where water heating to temperatures higher than those possible using the heat produced by the pump 17 is required, common heating means, such as an electrical resistance, could be fitted in a convenient position.

The invention conceived in this way is open to numerous modifications and variations, all of which are within the terms of this invention. Furthermore, any or all of these details can be replaced by their technical equivalents.

In practice, modifications and improvements, to shape, measurements and relative positioning of components in particular, are clearly possible and all come within the terms of the following claims.

## Claims

1. Water regenerator device for aquariums, fish-breeding tanks, tanks, swimming pools and similar wherein the said device consists of a single body (1) with a prismatic shape placed and positioned inside a container (2) containing water to be regenerated, the said device housing the following parts listed here in their functional order:

- a first decantation compartment (3), prismatic in shape, with at least one side (4) in contact with the water to be regenerated inside the container (2) having on the lower part of the said side (4) one or more inlet holes (5) and on the upper part a pick-up grill (6) for the water to be regenerated, said grill being at a height that ensures the transfer by overflow of the water in compartment (3) during normal water level variations in a periodic cycle;

- a second decantation compartment (7) also with a prismatic shape, lower than the said first decantation compartment (3), which receives the water to be regenerated from the adjacent first decantation compartment (3) when the latter overflows;

- a third compartment (10) containing a percolator filter (11) mounted between a first, upper grate (12) and a second, lower grate (13) both being water permeable and connected to the said second decantation compartment (7) and receiving water from the latter when it overflows;

- a fourth expansion compartment (15) below the other compartments extending for the full length of the said compartments (3, 7 and 10) which receives the regenerated water from the said percolator filter (11) through the grate (13) on an inclined surface (14) forming the top part of the fourth compartment (15);

- a chamber (16) positioned alongside the said third compartment (10), housing a pump (17) with a first inlet pipe (18) connected to the container (2) and a second inlet pipe (19) leading off the first inlet pipe (18) and connected to the second decantation compartment (3) and with a suction connection (34) to the said expansion compartment (15);

- the said expansion compartment (15) is fitted with a valve (22) which permits the flow of water to be regenerated from the container (2) to the said expansion compartment (15) when the regenerated water in the expansion compartment (15) is close to and just above the said suction level (34) of the pump (17) so as to restore the said level to the normal running conditions for the expansion compartment (15);

2. A water regenerator, as described in claim 1, wherein said regenerator includes an anti-foaming device (8).

3. A water regenerator, as described in claim 1, wherein said regenerator also has phase separator and flocculation means.

4. A water regenerator, as described in claim 1, wherein the anti-foaming device (8) is housed in the said compartment (7) and where the said second decantation compartment (7) is divided into two sub-compartments (20) and (21) the second of which is lower than the first and which are connected at the bottom by a space defined by a dividing wall (9) inside the compartment (7) and both connected at the top by overflow to the said third compartment (10); the said first sub-compartment (20) houses the anti-foaming device (8).

5. A water regenerator, as described in claim 2, wherein the said sub-compartments (20) and (21) each have at their upper ends angled water conveying plates (29, 30) both on the same side but on different levels both of which convey the water to the said third compartment (10).

6. A water regenerator, as described in claim 1, wherein the said compartments (3, 7) are vertically longer than they are wide or deep.

7. A water regenerator, as described in claim 1, wherein the said pick-up grill (6) is positioned at an angle in relation to the body (1) and covers a inlet surface (32) for the water to be regenerated which ends at the upper end of the said first decantation compartment (3).

7. A water regenerator, as described in claim 1, wherein the said inclined surface (14) has a curved end (23) on its lower side; the said curved end is curved downwards into the said fourth expansion compartment (15) below or level with, during operation, the regenerated water contained in the said compartment.

8. A water regenerator, as described in claim 1, wherein the said inlet tubes (18, 19) each have flow regulator valves (24, 25).

9. A water regenerator, as described in claim 1, wherein at least the said first inlet tube (18) has a device (26) which sucks air in from the outside using the vacuum created by the flow of regenerated water in the pipe.

10. A water regenerator, as described in claim 1, wherein the said pump (17) housed in the chamber (16) has a third inlet pipe (27) with its own flow regulator valve (28) for feeding regenerated water to the bottom of the container (2).

**11.** A water regenerator, as described in claim 1, wherein the said percolator filter (11) consists a number of layers of filter material.

**12.** A water regenerator, as described in claim 1, wherein the said fourth expansion compartment (15) and the said chamber (16) are interconnected and that the pump is of the immersion type.

**13.** A water regenerator, as described in claim 1, wherein the said regenerator has water heating means common to all components.

**14.** A water regenerator, as described in claim 1, wherein the said valve (22) is of the float type .

**15.** A water regenerator device for aquariums, fish-breeding tanks, tanks, swimming pools and similar wherein the device consists of a single body (1) with a cylindrical shape placed and positioned inside a container (2) containing water to be regenerated, the said device housing the following parts listed here in their functional order:

- a first decantation compartment (3), cylindrical in shape, with at least one side (4) in contact with the water to be regenerated inside the container (2) having on the lower part of the said side (4) one or more inlet holes (5) and on the upper part a pick-up grill (6) for the water to be regenerated, said grill being at a height that ensures the transfer by overflow of the water in compartment (3) during normal water level variations in a periodic cycle;

- a second decantation compartment (7) also with a cylindrical shape, lower than the said first decantation compartment (3), which receives the water to be regenerated from the adjacent first decantation compartment (3) when the latter overflows;

- a third compartment (10) containing a percolator filter (11) mounted between a first, upper grate (12) and a second, lower grate (13) both being water permeable and connected to the said second decantation compartment (7) and receiving water from the latter when it overflows;

- a fourth expansion compartment (15) below the other compartments extending for the full length of the said compartments (3, 7 and 10) which receives the regenerated water from the said percolator filter (11) through the grate (13) on an inclined surface (14) forming the top part of the fourth compartment (15);

- a chamber (16) positioned alongside the said third compartment (10), housing a pump (17) with a first inlet pipe (18) connected to the container (2) and a second inlet pipe (19)

leading off the first inlet pipe (18) and connected to the second decantation compartment (3) and with a suction connection (34) to the said expansion compartment (15);

- the said expansion compartment (15) is fitted with a valve (22) which permits the flow of water to be regenerated from the container (2) to the said expansion compartment (15) when the regenerated water in the expansion compartment (15) is close to and just above the said suction level (34) of the pump (17) so as to restore the said level to the normal running conditions for the expansion compartment (15).

FIG1

FIG 2

FIG 3

FIG4